# EUROPEAN PATENT SPECIFICATION

(11) **EP 1 181 689 B1**
(45) Date of publication and mention of the grant of the patent: **10.03.2004**
(21) Application number: 00935906.8
(22) Date of filing: 10.05.2000
(51) Int. Cl.: G11B 20/10

(54) **Methods for Recording and Reading Data from a Compact Disk, and a Compact Disk Player**
Verfahren zum Aufzeichnen und Wiedergeben von einer CD, und CD Spieler
Procédés d'enregistrement et de reproduction des données d'un CD et lecteur de CD

(30) Priority: 11.05.1999 US 133456 P
(43) Date of publication of application: 27.02.2002
(73) Proprietor: MACROVISION CORPORATION, Sunnyvale, CA 94089 (US)
(72) Inventor: DOWNING, Daniel, D., Montara, CA 94037 (US)
(74) Representative: Needle, Jacqueline
(86) International application number: PCT/US2000/012810
(87) International publication number: WO 2000/068945

(56) References cited:
- EP-A- 0 418 964
- EP-A- 0 783 167
- WO-A-98/03973
- WO-A-98/52114
- WO-A-98/52194
- PATENT ABSTRACTS OF JAPAN vol. 1996, no. 10, 31 October 1996 (1996-10-31) & JP 08 153331 A (APPLICS:KK), 11 June 1996 (1996-06-11)
- ECMA STANDARDIZING INFORMATION AND COMMUNICATION SYSTEMS: "Standard ECMA - 130 : Data interchange on read-only 120 mm optical disks (CD-ROM)" STANDARD ECMA-130, XP002143627 Geneva, Switzerland

## Description

The present invention relates to a method for recording data onto a compact disk, to a method of reproducing data from a compact disk, and to a compact disk playback system.

Compact disks (CDs) are well known and there are a variety of types of compact disks. For instance, CDROMs typically hold computer programs and data. There are also audio compact disks which hold music and other audio, and video compact disks for material such as movies. Each type of compact disk has an associated player. There are a variety of compact disk standards.

Compact disks are a digital storage media, unlike conventional videotape. Therefore copies of such digital material contain all of the information of the original and are a frequent target for pirates (copyright infringers) who make unauthorised copies or otherwise misuse the same. There have been developed a number of security systems to prevent unauthorized copying in the compact disk field.

There is a need for a compliant compact disk system where a compact disk player is only enabled to play proprietary or compliant compact disks (CDs). That is, the compliant CD player cannot play standard CDs and the compliant CDs do not play on standard CD players. This protects the proprietary or compliant CDs against copying as they cannot be played on standard players, and if they are copied, they cannot be played successfully on either a standard CD player or on a compliant CD player. Thus, this is an entirely closed system in terms of the compliant CDs and associated compliant players. Anyone wishing to play a compliant CD must have a compliant player, the use of which is limited to playing compliant CDs. Of course, such a system is targeted to particular markets and requires availability of both the compliant players and the compliant CDs. A typical application is for a toy system where there is no need to play generally available CDs but only the toy system's CDs are of interest.

Any such system must be relatively inexpensive to implement (since these are consumer players), must be robust so as to prevent copying, and must not interfere with the playing and enjoyment of the CD program material. The cost requirement is especially restrictive since even a few dollars of added cost are problematic in consumer electronics. Therefore, well-known methods such as encryption are not generally suitable since they may require inclusion in the player of a dedicated decryption integrated circuit. Since the decryption must be performed in real time, software decryption is generally less useful in this context.

Patent Abstracts of Japan, Vol 1996, No. 10, 31 st October 1996 and JP-A-08 153331 describes a signature method for copy protecting a CD where an identification code is embedded in the data on the CD and a player reading the CD is required to access the identification code in order to be enabled to access the data on the CD.

WO-A-9852114 describes a method of recording data onto a compact disk, comprising the steps of: receiving a first plurality of frames of data at a Cross Interleave Reed-Solomon Code (CIRC) encoder; encoding the first plurality of frames of data by the CIRC encoder to generate a second plurality of frames of data; generating a set of data to form a Q sub-channel; forming a plurality of control bytes including the Q sub-channel data; adding one of the control bytes to each one of the second plurality of frames of data to generate a third plurality of frames of data; encoding selected portions of the third plurality of frames of data by an EFM encoder to generate a plurality of channel frames; and recording the channel frames onto a compact disk.

WO-A-9852114 is also a signature method for copy protecting a CD and additionally generates non-standard subcode to act as an identification code. The signature method does not provide compliant CDs and players as the non-standard subcode is normally disregarded when reading the disk.

According to a first aspect of the present invention, a method of recording data onto a compact disk as defined above is characterised in that selected data bits in the Q sub-channel are altered in a Q sub-channel encoder before the control bytes including the Q sub-channel data are formed, the alteration of the Q sub-channel data bits being arranged to prevent access to the recorded data except by a compliant disk player.

In one embodiment, altering the selected data bits in the Q sub-channel comprises reading a plurality of stored encoding bits; and performing an exclusive-OR operation between the selected data bits in the Q sub-channel and corresponding ones of the encoding bits.

In an alternative embodiment, altering the selected data bits in the Q sub-channel comprises selectively inverting the Q sub-channel data bits.

The method may additionally comprise the step of inverting the first plurality of data frames prior to their application to the CIRC encoder.

The invention also extends to a method of reproducing data from a compact disk comprising the steps of: receiving a plurality of channel frames at an EFM decoder; decoding the channel frames using EFM decoding to generate F3 frames; locating Q sub-channel bits in respective control bytes of the F3 frames; decoding the Q sub-channel bits to generate decoded Q sub-channel information; and decoding and presenting the F3 frames using the decoded Q sub-channel information; characterised in that decoding of the Q sub-channel bits comprises altering selected data bits in the Q sub-channel to enable reproduction of the data from the compact disk.

According to a further aspect of the present invention there is provided a compact disk playback system comprising a data reading system arranged to read a plurality of channel frames from a compact disk; an EFM decoder arranged to decode the channel frames to generate F3 frames; a Q sub-channel decoder arranged to locate Q sub-channel bits in respective control bytes of the F3 frames and to generate decoded Q sub-channel information; and a signal decoding and presentation system to receive and decode the F3 frames to generate a data stream using the decoded Q sub-channel information and to present the data stream in a perceptible form to a user, characterised in that the Q sub-channel decoder is arranged to alter selected data bits in the Q sub-channel to enable presentation of the data stream in a perceptible form to a user.

Embodiments of the present invention will hereinafter be described, by way of example, with reference to the accompanying drawings, in which:
FIG. 1A shows a first portion of a method for creating a compliant CD in accordance with an embodiment of the invention;
FIG. 1B shows a continuation of the method of FIG 1A; and
FIG. 2 is a simplified block diagram of an embodiment of a CD playback system of the present invention.

The present invention relates to the creation and playback of compact disks (CDs). It is not limited to any specific form of CD such as CDROMs (typically used for computer data), or video CDs. The invention is described with specific reference to video CDs, but is applicable to other types of CDs with suitable modifications, as will be apparent to those skilled in the art.

The process described herein is in the context of CDROMs and the terminology is in accordance with the ISO/IEC 10149, Second Edition (1995-07-15) specification for CDROMs. With suitable modifications this is applicable to video CDs.

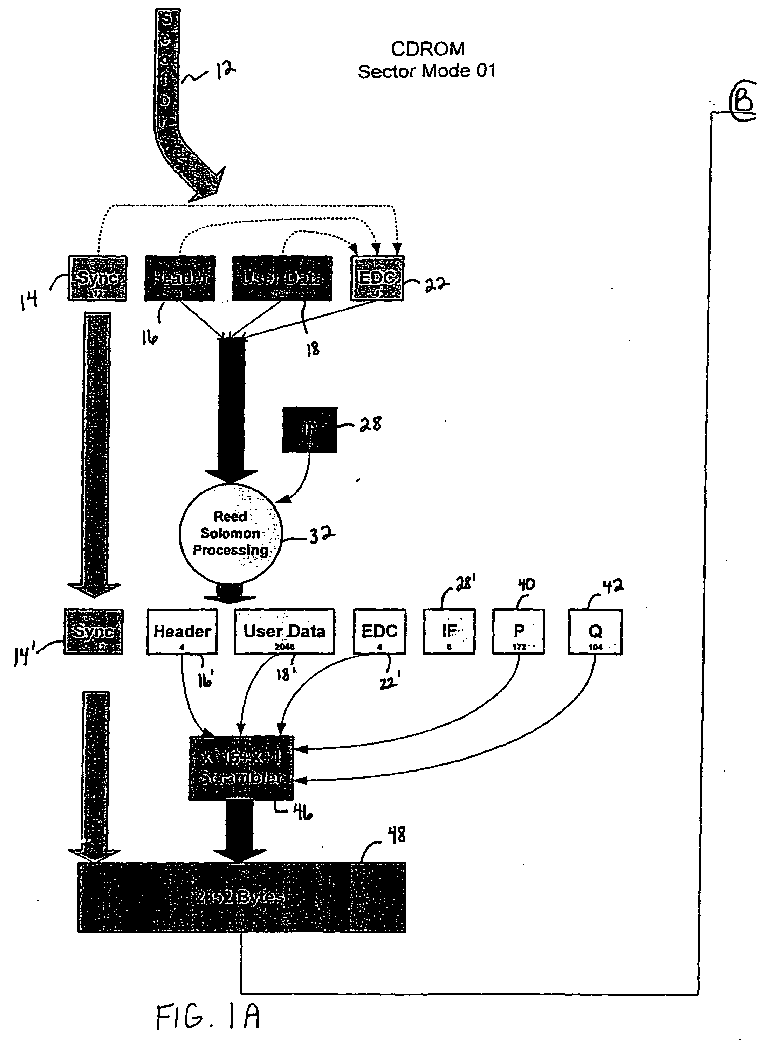

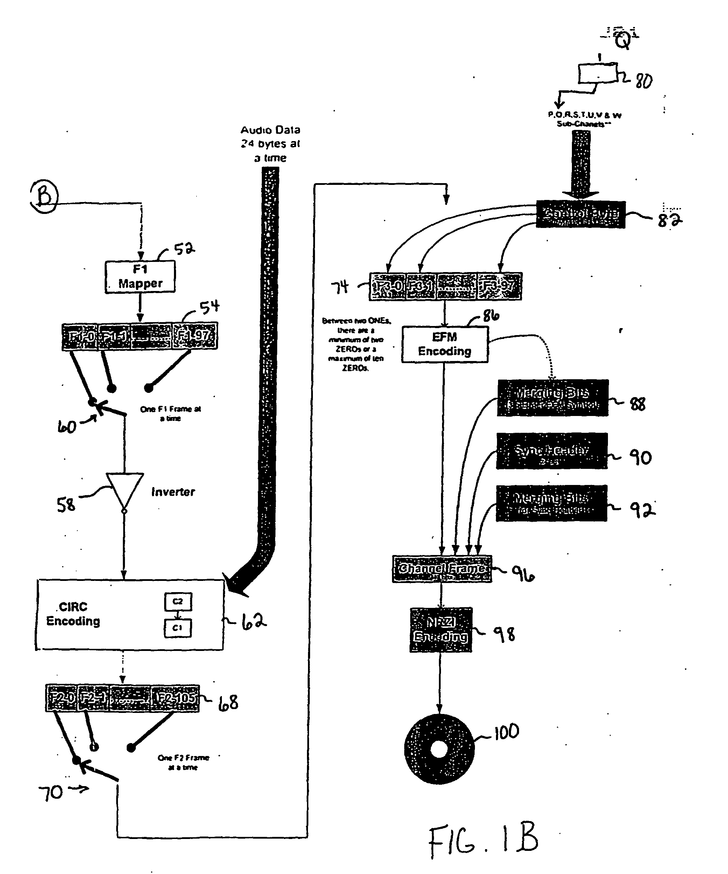

FIGs. 1A and 1B together show the process steps of a method for creating a compliant CD. Most of FIGs. 1A and 1B is conventional, except for two data alterations. Hence, while the following description is of the entire CD creation (writing) process, it is to be understood that most of this is conventional and disclosed here only for background purposes. The specification referred to above gives further detail of the data structures on a typical CD. Again this is merely illustrative of one CD specification standard.

Beginning in the upper left hand portion of FIG. 1A there is the incoming "sector" data 12. The term "sector" refers to this as being digital data already partitioned into sectors.

This incoming sector data 12 is arranged in various fields. Thus, the incoming data is put in a user data field 18, and an associated overhead sync field 14, a header field 16, and an EDC (Error Detection Code) field 22 are created by a CDROM encoder. The small numerals under each field name designate the field length in bytes. The user data 18 is the largest field. The other fields are the overhead fields.

The data in the sync field 14 is then passed directly to the next step 14'. This is combined with the IF (intermediate field) field 28. The resulting fields including the IF field 28' are shown below the Reed Solomon processing 32. The IF field is eight bytes of zero value. Added at this point, due to the Reed Solomon processing, is the Q field. The P and Q fields are the Forward Error Correction codes. At this point the header, user data, EDC, P and Q fields are subject to a scrambler 46 using the scrambling algorithm 46. This results in a 2,352 byte data structure 48.

Processing continues as B. (Reference character B merely shows the continuation of the process). In FIG. 1B, next is the F1 mapper 52, which maps the 2,352 byte data structure 48 into 98 F1 frames designated 0 through 97. (These frames are not the same as ordinary video frames). Each F1 frame 54 has a length of 24 bytes.

Up to this point, all processing is conventional. At this point, scrambling (inversion) to produce a compliant disk is introduced by processing the F1 frame data 54 through inverter 58. (An alternative to this scrambling is encryption). Inverter 58 accepts one F1 frame at a time, as shown by the switching process 60 which conventionally interleaves the frames. Each frame is subject to a simple bit-by-bit inversion of all of its data including the sector address information. Thus each 1 bit is inverted to 0 and each 0 bit is inverted to 1.

Subsequent processing is conventional, including the Cross Interleaved Reed-Solomon Code (CIRC) encoding 62. The CIRC encoder as shown accepts data from the inverter or from an audio input.

The CIRC encoder 62 adds 8 bytes of data to each of the 98 F1 frames. This data is spread out over 106 F2 frames, each of 32 bytes. The F2 frame data which includes the CIRC information from the CIRC encoder 62 thus becomes 106 32-byte frames stored in register 68. This is read out by switching process 70 to become 98 33-byte F3 frames 74, which form a section. F3 frames are identical to F2 frames except for the added control byte 82.

The information for each frame in the P, Q, R, S, T, U, V and W sub-channels is added as shown to form the control byte 82 of 8 bits. Thus there is a single bit in byte 82 for each sub-channel P through W. These sub-channels are for control purposes. The typical use of the P sub-channel is for an audio player to indicate when the audio starts and stops. The Q sub-channel typically includes the table of contents of the program information in the lead-in area of the disk, and includes index and elapsed time information in the user data area of the disk, as specified in ISO/IEC 10149. The other sub-channels typically are not used.

An additional scrambling step is now introduced in which at least the sector address information in the Q sub-channel table of contents is scrambled or otherwise altered by a Q sub-channel encoder 80. Two examples of such alteration of the Q sub-channel are described herein. However, it will be understood that other methods of encoding the Q sub-channel may be used.

In the first example, the entire Q sub-channel, or selected portions thereof, are subject to an inversion. P, Q, R, S, T, U, V, W sub-channel processing is typically performed off-line and also involves subjecting, in the Q sub-channel, at least the sector address information to an inversion by Q sub-channel encoder 80. Thus, at least the sector address information in the Q sub-channel is subject to this inversion, on a bit-by-bit basis. The resulting control byte 82 is then appended to each of the F3 frames.

In the second example of Q sub-channel encoding, a portion of the Q sub-channel is scrambled using an exclusive-OR function in Q sub-channel encoder 80. The Q sub-channel of a 98-frame section typically comprises 96 bits, since the first two control bytes of a section are occupied by the S0 and S1 bytes. The Q sub-channel of a section typically comprises a control field (4 bits), a q-Mode field (4 bits), a q-Data field (72 bits) and a cyclical redundancy check (CRC) field (16 bits). The first 80 bits of the Q sub-channel may be scrambled using the XOR function described below, while the last 16 bits which make up the CRC field are computed in the usual fashion.

The first 80 bits of the Q sub-channel may be treated as 10 eight-bit bytes. These 10 bytes may be XORed on a byte-by-byte basis with 10 eight-bit encoding bytes. The encoding bytes may be selected arbitrarily. An exemplary set of 10 encoding bytes is set forth in Table A

**TABLE A**

| Byte | Value |
|---|---|
| 0 | 01110001 |
| 1 | 10001110 |
| 2 | 00110011 |
| 3 | 11001100 |
| 4 | 10101010 |
| 5 | 01010101 |
| 6 | 11110000 |
| 7 | 00001111 |
| 8 | 11111111 |
| 9 | 00000000 |

It will be understood that this second exemplary method of encoding the Q sub-channel simply provides selective inversion of Q sub-channel bits. Wherever a "one" occurs in an encoding byte, the corresponding bit of the Q sub-channel is inverted, while a "zero" in the encoding byte means that the corresponding bit of the Q sub-channel is left unchanged. This is in contrast to the first exemplary encoding method described above, in which all bits of at least a portion of the Q sub-channel are inverted.

This Q sub-channel scrambling may eliminate the need for the other inverter (inverter 58 in FIG. 1B). Scrambling the Q sub-channel address information may provide some protection, but scrambling most of the information provides more protection. As previously described, the format for the data stored in the Q sub-channel varies depending upon its location on the CD. The general format is data followed by the CRC. In this embodiment, the data portion is altered prior to the calculation of the CRC. There is one portion of this data which in some instances may not be altered.

The 98 F3 frames are eventually written to the CD as a series of channel frames, where the first channel frame has the control byte forced to be the conventional S0 sync symbol and the second channel frame has the control byte forced to be the conventional S1 sync symbol. S0 and S1 sync symbols have no relationship to the "Sync Header" block 90 in FIG. 1B. An optical pickup head senses data on a CD as a series of bits which are picked up from the disk in serial fashion in order to reconstruct the 98 F3 frames. It is necessary to identify frame F3-0 or F3-1. This is done by looking for either the S0 or S1 symbols. Therefore the S0 and S1 symbols cannot be altered in systems which use a standard IC (integrated circuit) which only detects the standard (i.e. non-inverted) S0 or S1 symbol. Further, the CRC is not altered either because in systems that use a standard IC with CRC, the verification circuitry would (falsely) determine that the CRC is wrong.

In systems which use standard ICs care has to be taken in determining which parts of the data are to be inverted so that the S0 and S1 symbols can be successfully detected (in those channel frames that have them) and so that the CRC can be recovered correctly.

The following processing in FIG. 1B is conventional, and includes EFM encoding 86. This requires encoding such that between two 1's there are a minimum of two 0's or a maximum of ten 0's. This EFM encoding is performed for signal processing purposes. At this point, additionally the merging bits 88 (three per EFM symbol), the sync header 90 and the merging bits (for the sync header) 92 are added, resulting in the channel frame 96. This is then subject to the non-return to zero inverted (NRZI) encoding 98. The NRZI encoded information is then written onto a master disk 100. This master disk is then used conventionally to produce "stampers" which press out the plastic disks which are commercially distributed.

Hence FIGs. 1A and 1B show the CD encoding (writing) process. For video CDs, a similar process is used except that there is no IF field, Reed Solomon processing, or P and Q fields.

The compliant player which is to read the resulting CDs, whilst largely conventional, includes two suitable logic functions respectively complementary to inverter 58 and Q sub-channel encoder 80. These two functional blocks in the player respectively (1) re-invert data in the data stream and (2) decode the Q sub-channel in accordance with the encoding method used. Hence the compliant player is conventional except for these two additional logic functions. The inverters need not be hardware devices but may be software functions, given adequate processing speed. The same of course is true for the inverter 58 and Q sub-channel encoder 80 in FIG. 1B; they may be hardware logic or software logic functions.

In another embodiment, there may be only one inversion process e.g., in the Q sub-channel alone rather than in both the Q sub-channel and the data stream as shown in FIG. 1B. However, it is preferred to have two inversions or alterations as shown in FIG. 1B. This ensures that standard players are unable to play a compliant CD-ROM. In the absence of one of the inversion processes, some conventional (non-compliant) players may be able to play such a compliant disk, which is considered undesirable.

Also, in another embodiment there is no inversion but instead the only change is in the sector address information in the Q sub-channel. In this embodiment, rather than being in the Q sub-channel, the sector address information is instead put in one of the unused sub-channels such as R, S, T, etc. In this case there is no inversion or scrambling. Again the compliant player must be complementary to read the sector address from the correct sub-channel in which this information is now located.

The simple inversion scrambling of FIG. 1B is of course not limiting. Other types of more sophisticated scrambling and/or encryption may be used. However, even the simplest type of scrambling is effective in this context.

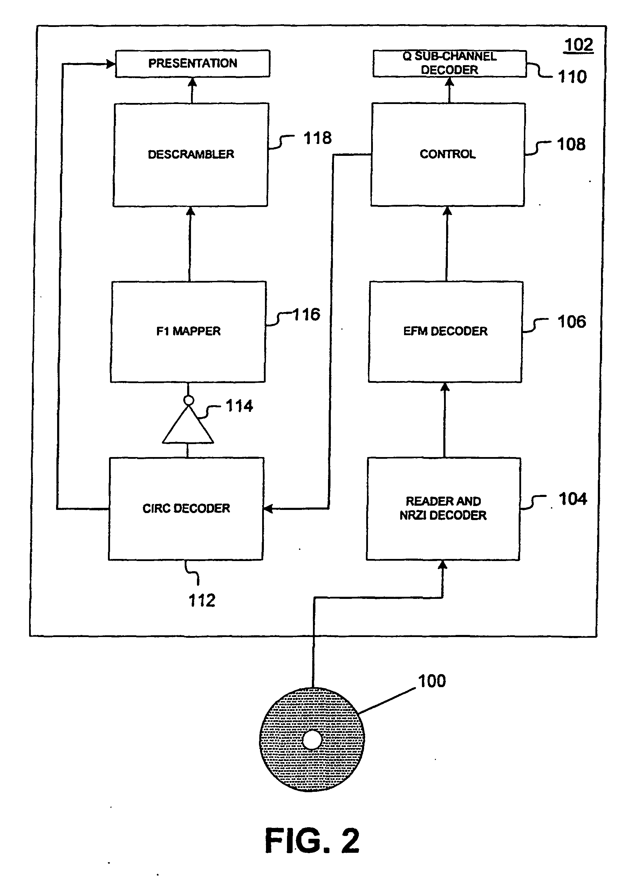

Referring to FIG. 2, a simplified block diagram of an example of a CD playback system 102 is shown. Playback system 102 includes a CD reading and NRZI decoding system 104, which may include laser optical elements for reading information from CD 100 and a conventional NRZI decoder to extract data bits from the resulting signal. The data generated by CD reading and NRZI decoding system 104 includes data in the form of channel frames.

A conventional EFM decoding system 106 converts the fourteen-bit bytes of the channel frames to eight-bit bytes, thereby generating a series of F3 frames. EFM decoding system 106 discards the merging bits and sync header information from the data stream.

A control block 108 extracts the control bytes from the F3 frames to generate F2 frames. The Q sub-channel data from the control bytes is provided to a Q sub-channel decoder 110, which performs a decoding function corresponding to the encoding function performed by Q sub-channel encoder 80 shown in FIGURE 1 B. For example, when Q sub-channel encoder 80 performs an XOR function using a set of encoding bytes as previously described, Q sub-channel decoder 110 may decode the Q sub-channel by performing an XOR function on the encoded Q sub-channel using the same set of encoding bytes, thereby restoring the original Q sub-channel information. The restored or decoded Q sub-channel may then be used by other parts of playback system 102 (not shown) in a conventional manner to assist in the decoding and presentation of the data from CD 100.

The F2 frames generated by control block 108 are provided to a CIRC decoder 112, which operates in a conventional manner to decode the F2 frames to generate either audio data or F1 frames. The resulting F1 frames may be inverted by an inverter 114 if an inverter 58 (shown in FIG. 1 B) is used in the CD recording process.

An F1 mapper 116 receives the inverted F1 frames and uses a conventional mapping function to obtain scrambled sector data, which is then descrambled by descrambler 118 to restore the original sector data. This sector data is then provided to a presentation system 120, which may include digital to analog converters, speakers, a display screen, or other conventional equipment to present the sector data from CD 100 to a user. Audio data decoded by CIRC decoder 112 may be provided directly to presentation system 120 for presentation to the user.

By performing the inverse of the data encoding functions illustrated in FIGs. 1A and 1B, CD playback system 102 is able to play back a CD 100 recorded using the methods described above, which may not be played back by conventional CD playback systems.

It will be appreciated that the present method and apparatus are not limited to video; also computer data and audio program material on CDs may be protected as described. In addition to the above-described scrambling, other ways of altering the Q sub-channel information may be used. It is a requirement that the alterations made be systematic or reversible.

Although specific embodiments of the present invention have been described and illustrated, it will be understood that various changes, substitutions, and alterations can be made thereto without departing from the scope of the present invention as defined by the appended daims.

## Claims

1. A method for recording data onto a compact disk, comprising the steps of:
receiving a first plurality of frames of data at a Cross Interleave Reed-Solomon Code, CIRC, encoder (62);
encoding the first plurality of frames of data by the CIRC encoder (62) to generate a second plurality of frames of data;
generating a set of data to form a Q sub-channel;
forming a plurality of control bytes including the Q sub-channel data;
adding one of the control bytes to each one of the second plurality of frames of data to generate a third plurality of frames of data;
encoding selected portions of the third plurality of frames of data by an EFM encoder (86) to generate a plurality of channel frames; and
recording the channel frames onto the compact disk;
**characterised in that** selected data bits in the Q sub-channel are altered in a Q sub-channel encoder (80) before the control bytes including the Q sub-channel data are formed, the alteration of the Q sub-channel data bits being arranged to prevent access to the recorded data except by a compliant disk player which is able to reverse the alteration.

2. A method as claimed in Claim 1, wherein altering the selected data bits in the Q sub-channel comprises:
reading a plurality of stored encoding bits; and
performing an exclusive-OR operation between the selected data bits in the Q sub-channel and corresponding ones of the encoding bits.

3. A method as claimed in Claim 1, wherein altering the selected data bits in the Q sub-channel comprises:
selectively inverting the Q sub-channel data bits.

4. A method as claimed in Claim 1, wherein altering the selected data bits in the Q sub-channel comprises:
relocating the selected data bits in the Q sub-channel to respective alternative sub-channel locations of the control bytes.

5. A method as claimed in any preceding claim, further comprising inverting the first plurality of data frames prior to their application to the CIRC encoder (62).

6. A method as claimed in any preceding claim, further comprising:
scrambling a sector of data to generate a scrambled sector; and
rearranging the scrambled sector to generate the first plurality of frames of data.

7. A method of reproducing data from a compact disk, comprising the steps of:
receiving a plurality of channel frames of data at an EFM decoder (106);
decoding the channel frames using EFM decoding to generate F3 frames;
locating Q sub-channel bits in respective control bytes of the F3 frames;
decoding the Q sub-channel bits to generate decoded Q sub-channel information; and
decoding and presenting the F3 frames using the decoded Q sub-channel information;
**characterised in that** decoding of the Q sub-channel bits comprises altering selected data bits in the Q sub-channel to enable reproduction of the data from the compact disk.

8. A method as claimed in Claim 7, wherein altering the selected data bits in the Q sub-channel comprises:
reading a plurality of stored encoding bits; and
performing an exclusive-OR operation between the selected data bits in the Q sub-channel and corresponding ones of the data bits.

9. A method as claimed in Claim 7, wherein altering the selected data bits in the Q sub-channel comprises:
selectively inverting the Q sub-channel data bits.

10. A method as claimed in any of Claims 7 to 9, further comprising applying decoded data frames to a CIRC decoder (112), and inverting the data frames output from the CIRC decoder (112).

11. A method as claimed in any of Claims 7 to 9, wherein decoding and presenting the F3 frames comprises:
removing a control byte from each F3 frame to generate an F2 frame;
receiving the F2 frame at a Cross Interleave Reed-Solomon Code (CIRC) decoder (112); and
decoding the F2 frame by the CIRC decoder (112).

12. A method as claimed in Claim 11, wherein decoding and presenting the F3 frames further comprises:
descrambling the output of the CIRC decoder (112) to generate a data stream; and
presenting the data stream in a perceptible form to a user.

13. A method as claimed in Claim 12, wherein decoding and presenting the F3 frames further comprises inverting the output of the CIRC decoder (112) prior to descrambling the output of the CIRC decoder.

14. A compact disk playback system comprising:
a data reading system (104) arranged to read a plurality of channel frames from a compact disk;
an EFM decoder (106) arranged to decode the channel frames to generate F3 frames;
a Q sub-channel decoder (110) arranged to locate Q sub-channel bits in respective control bytes of the F3 frames and to generate decoded Q sub-channel information; and
a signal decoding and presentation system (108, 112, 114, 116, 118) arranged to receive and decode the F3 frames to generate a data stream using the decoded Q sub-channel information and to present the data stream in a perceptible form to a user;
**characterised in that** the Q sub-channel decoder (110) is arranged to alter selected data bits in the Q sub-channel to enable presentation of the data stream in a perceptible form to a user.

15. A compact disk playback system as claimed in Claim 14, wherein the Q sub-channel decoder (110) is arranged to read a plurality of stored encoding bits; and to perform an exclusive-OR operation between the selected data bits in the Q sub-channel and corresponding ones of the data bits.

16. A compact disk playback system as claimed in Claim 14, wherein the Q sub-channel decoder (110) is arranged to selectively invert the Q sub-channel data bits.

17. A compact disk playback system as claimed in Claim 14, wherein the signal decoding and presentation system (108, 112, 114, 116, 118) comprises a CIRC decoder (112) arranged to receive data frames generated using the decoded Q sub-channel information, and an inverter (114) arranged to receive and invert data frames output from the CIRC decoder (112).

18. A compact disk playback system as claimed in any of Claims 14 to 16, wherein the signal decoding and presentation system (108, 112, 114, 116, 118) comprises:
a control block (108) arranged to remove a control byte from each F3 frame to generate an F2 frame; and
a Cross Interleave Reed-Solomon Code (CIRC) decoder (112) arranged to receive and decode the F2 frame.

19. A compact disk playback system as claimed in Claim 18, wherein the signal decoding and presentation system (108, 112, 114, 116, 118) further comprises:
a descrambling system (118) arranged to descramble the output of the CIRC decoder (112) to generate a data stream; and
a presentation system arranged to present the data stream in a perceptible form to a user.

20. A compact disk playback system as claimed in Claim 19, wherein the signal decoding and presentation system (108, 112, 114, 116, 118) further comprises an inverter (114) arranged to invert the output of the CIRC decoder (112) prior to the descrambling of the output of the CIRC decoder (112) by the descrambling system (118).

## Patentansprüche

1. Verfahren zum Aufzeichnen von Daten auf eine Compact Disc, mit den Schritten:
Empfangen einer ersten Mehrzahl von Daten-Frames an einem Cross-Interleave-Reed-Solomon-Code, CIRC, Codierer (62),
Codieren der ersten Mehrzahl von Daten-Frames durch den CIRC-Codierer (62), um eine zweite Mehrzahl von Daten-Frames zu erzeugen,
Erzeugen eines Datensatzes, um einen Q-Subcode-Kanal zu bilden,
Bilden einer Mehrzahl von Steuerungs-Bytes einschließlich der Q-Subcode-Kanaldaten,
Hinzufügen eines der Steuerungs-Bytes zu jedem der zweiten Mehrzahl von Daten-Frames, um eine dritte Mehrzahl von Daten-Frames zu erzeugen,
Codieren ausgewählter Bereiche der dritten Mehrzahl von Daten-Frames durch eine EFM-Codierer (86), um eine Mehrzahl von Channel-Frames zu erzeugen, und
Aufzeichnen der Channel-Frames auf die Compact Disc,
**dadurch gekennzeichnet, dass** ausgewählte Datenbits in dem Q-Subcode-Kanal in einem Q-Subcode-Kanalcodierer (80) geändert werden, bevor die Steuerungs-Bytes einschließlich der Q-Subcode-Kanaldaten gebildet werden, wobei die Änderung der Q-Subcode-Kanaldatenbits so vorbereitet ist, um den Zugriff auf die aufgezeichneten Daten außer durch einen konformen Disc-Spieler, der in der Lage ist, die Veränderung umzukehren, zu verhindern.

2. Verfahren nach Anspruch 1, wobei das Verändern der ausgewählten Datenbits in dem Q-Subcode-Kanal umfasst:
Lesen einer Mehrzahl von gespeicherten Codierungsbits, und
Ausführen einer exklusiven ODER-Operation zwischen den ausgewählten Datenbits in dem Q-Subcode-Kanal und den Entsprechenden der Codierungsbits.

3. Verfahren nach Anspruch 1, wobei das Verändern der ausgwählten Datenbits in dem Q-Subcode-Kanal umfasst:
selektives Invertieren der Q-Subcode-Kanaldatenbits.

4. Verfahren nach Anspruch 1, wobei das Verändern der ausgewählten Datenbits in dem Q-Subcode-Kanal umfasst:
Verschieben der ausgewählten Datenbits in dem Q-Subcode-Kanal auf jeweilige alternative Subcode-Kanalpositionen der Steuerungs-Bytes.

5. Verfahren nach einem der vorhergehenden Ansprüche, bei dem weiter die erste Mehrzahl von Daten-Frames vor ihrer Anwendung auf den CIRC-Codierer (62) invertiert wird.

6. Verfahren nach einem der vorhergehenden Ansprüche, bei dem weiter:
ein Datensektor verschlüsselt wird, um einen verschlüsselten Sektor zu erzeugen, und
der verschlüsselte Sektor neu formiert wird, um die erste Mehrzahl von Daten-Frames zu bilden.

7. Verfahren zur Wiedergabe von Daten von einer Compact Disc, mit den Schritten:
Empfangen einer Mehrzahl von Channel-Frames von Daten an einem EFM-Codierer (106),
Decodieren der Channel-Frames unter Verwendung der EFM-Decodierung, um F3-Frames zu erzeugen,
Lokalisieren von Q-Subcode-Kanalbits in jeweiligen Steuerungs-Bytes der F3-Frames,
Decodieren der Q-Subcode-Kanalbits, um decodierte Q-Subcode-Kanalinformation zu erzeugen,
Decodieren und Präsentieren der F3-Frames unter Verwendung der decodierten Q-Subcode-Kanalinformationen,
**dadurch gekennzeichnet, dass** das Decodieren der Q-Subcode-Kanalbits das Verändern ausgewählter Datenbits in dem Q-Subcode-Kanal umfasst, um die Wiedergabe der Daten von der Compact Disc zu ermöglichen.

8. Verfahren nach Anspruch 7, wobei das Verändern der ausgewählten Datenbits in dem Q-Subcode-Kanal umfasst:
Lesen einer Mehrzahl von gespeicherten Codierungsbits, und
Ausführen einer exklusiven ODER-Operation zwischen den ausgewählten Datenbits in dem Q-Subcode-Kanal und den Entsprechenden der Codierungsbits.

9. Verfahren nach Anspruch 7, wobei das Verändern der ausgwählten Datenbits in dem Q-Subcode-Kanal umfasst:
selektives Invertieren der Q-Subcode-Kanaldatenbits.

10. Verfahren nach einem der Ansprüche 7 bis 9, bei dem weiter decodierte Daten-Frames zu einem CIRC-Decodierer (112) geleitet werden und die Daten-Frames, die von dem CIRC-Decodierer (112) ausgegeben werden, invertiert werden.

11. Verfahren nach einem der Ansprüche 7 bis 9, wobei das Decodieren und Präsentieren der F3-Frames umfasst:
Entfernen eines Steuerungs-Byte aus jedem F3-Frame, um ein F2-Frame zu erzeugen,
Empfangen des F2-Frames an einem Cross-Interleave-Reed-Solomon-Code (CIRC)-Decodierer (112), und
Decodieren des F2-Frames durch den CIRC-Decodierer (112).

12. Verfahren nach Anspruch 11, wobei das Decodieren und Präsentieren der F3-Frames weiter umfasst:
Entschlüsseln der Ausgabe des CIRC-Decodierers (112), um einen Datenstrom zu erzeugen, und
Präsentieren des Datenstroms in einer für einen Benutzer wahrnehmbaren Form.

13. Verfahren nach Anspruch 12, wobei das Decodieren und Präsentieren der F3-Frames weiter das Invertieren der Ausgabe des CIRC-Decodierers (112) vor dem Entschlüsseln der Ausgabe des CIRC-Decodierers umfasst.

14. Compact Disc-Abspielsystem mit:
einem Datenlesesystem (104), das dazu ausgelegt ist, eine Mehrzahl von Channel-Frames von einer Compact Disc zu lesen,
einem EFM-Decodierer (106), der dazu ausgelegt ist, die Channel-Frames zu decodieren, um F3-Frames zu erzeugen,
einem Q-Subcode-Kanal-Decodierer (110), der dazu ausgelegt ist, Q-Subcode-Kanalbits in jeweiligen Steuerungs-Bytes der F3-Frames zu lokalisieren und decodierte Q-Subcode-Kanalinformation zu erzeugen und
einem Signaldecodierungs- und -präsentationssystem (108, 112, 114, 116, 118), das dazu ausgelegt ist, die F3-Frames zu empfangen und zu decodieren, um unter Verwendung der decodierten Q-Subcode-Kanalinformation einen Datenstrom zu erzeugen und den Datenstrom in einer für einen Benutzer wahrnehmbaren Form zu präsentieren,
**dadurch gekennzeichnet, dass** der Q-Subcode-Kanal-Decodierer (110) dazu ausgelegt ist, ausgewählte Datenbits in dem Q-Subcode-Kanal zu verändern, um die Präsentation des Datenstroms in einer für einen Benutzer wahrnehmbaren Form zu ermöglichen.

15. Compact Disc-Abspielsystem nach Anspruch 14, wobei der Q-Subcode-Kanal-Decodierer (110) dazu ausgelegt ist, eine Mehrzahl von gespeicherten Codierungsbits zu lesen und eine exklusive ODER-Operation zwischen den ausgewählten Datenbits in dem Q-Subcode-Kanal und Entsprechenden der Datenbits auszuführen.

16. Compact Disc-Abspielssystem nach Anspruch 14, wobei der Q-Subcode-Kanal-Decodierer (110) dazu ausgelegt ist, Q-Subcode-Kanaldatenbits selektiv zu invertieren.

17. Compact Disc-Abspielsystem nach Anspruch 14, wobei das Signaldecodierungs- und -präsentationssystem (108, 112, 114, 116, 118) einen CIRC-Decodierer (112), der dazu ausgelegt ist, Daten-Frames zu empfangen, die unter Verwendung der decodierten Q-Subcode-Kanalinformation erzeugt wurden, und einen Inverter (114) aufweist, der dazu ausgelegt ist, Daten-Frames, die von dem CIRC-Decodierer (112) ausgegeben werden, zu empfangen und zu invertieren.

18. Compact Disc-Abspielsystem nach einem der Ansprüche 14 bis 16, wobei das Signaldecodierungs- und -präsentationssystem (108, 112, 114, 116, 118) aufweist:
einen Steuerungsblock (108), der dazu ausgelegt ist, ein Steuerungs-Byte aus jedem F3-Frame zu entfernen, um ein F2-Frame zu erzeugen, und
einen Cross-Interleave-Reed-Solomen-Code (CIRC)-Decodierer (112), der dazu ausgelegt ist, das F2-Frame zu empfangen und zu decodieren.

19. Compact Disc-Abspielsystem nach Anspruch 18, wobei das Signaldecodierungs- und -präsentationssystem (108, 112, 114, 116, 118) weiter aufweist:
ein Entschlüsselungssystem (108), das dazu ausgelegt ist, die Ausgabe des CIRC-Decodierers (112) zu entschlüsseln, um einen Datenstrom zu erzeugen, und
ein Präsentationssystem, das dazu ausgelegt ist, den Datenstrom in einer für einen Benutzer wahrnehmbaren Form zu präsentieren.

20. Compact Disc-Abspielsystem nach Anspruch 19, wobei das Signaldecodierungs- und -präsentationssystem (108, 112, 114, 116, 118) weiter einen Invertierer (114) aufweist, der dazu ausgelegt ist, die Ausgabe des CIRC-Decodierers (112) vor der Entschlüsselung der Ausgabe des CIRC-Decodierers (112) durch das Entschlüsselungssystem (118) zu invertieren.

## Revendications

1. Procédé d'enregistrement de données sur un disque compact, comprenant les étapes comprenant :
la réception d'une pluralité de trames de données sur un codeur CIRC (Cross Interleave Reed-Solomon Code) (62) à code de Reed-Solomon entrelacé et cascadé ;
le codage de la première pluralité de trames de données au moyen du codeur CIRC (62) pour générer une seconde pluralité de trames de données ;
la production d'un ensemble de données pour former un sous-canal Q ;
la formation d'une pluralité d'octets de commande comprenant les données du sous-canal Q ;
l'ajout de l'un des octets de commande à chacune de la seconde pluralité de trames de données pour produire une troisième pluralité de trames de données ;
le codage des parties sélectionnées de la troisième pluralité de trames de données au moyen d'un codeur EFM (86) pour produire une pluralité de trames de canaux ; et
l'enregistrement des trames de canaux sur le disque compact ;
**caractérisé en ce que** les bits de données sélectionnés dans le sous-canal Q sont modifiés dans un codeur de sous-canal Q (80) avant que les octets de commande contenant les données de sous-canal Q ne soient formés, la modification des bits de données du sous-canal Q étant apte à empêcher un accès aux données enregistrées sauf par un lecteur de disque conforme qui est capable d'inverser la modification.

2. Procédé selon la revendication 1, dans lequel la modification des bits de données sélectionnés dans le sous-canal Q comprend :
la lecture d'une pluralité de bits de codage stockés ; et
l'exécution d'une opération OU exclusif entre les bits de données sélectionnés dans le sous-canal Q et ceux qui leur correspondent des bits de codage.

3. Procédé selon la revendication 1, dans lequel la modification des bits de données sélectionnés dans le sous-canal Q comprend :
l'inversion sélective des bits de données du sous-canal Q.

4. Procédé selon la revendication 1, dans lequel la modification des bits de données sélectionnés dans le sous-canal Q comprend :
le repositionnement des bits de données sélectionnés dans le sous-canal Q à d'autres emplacements alternatifs respectifs dans le sous-canal des octets de commande.

5. Procédé selon l'une quelconque des revendications précédentes, comprenant en outre l'inversion de la première pluralité de trames de données avant leur application au codeur CIRC (62).

6. Procédé selon l'une quelconque des revendications précédentes, comprenant en outre :
l'embrouillage d'un secteur de données pour produire un secteur embrouillé ; et
le réarrangement du secteur embrouillé pour produire la première pluralité de trames de données.

7. Procédé de reproduction de données à partir d'un disque compact, comprenant les étapes :
de réception d'une pluralité de trames de données de canaux sur un décodeur EFM (106) ;
de décodage des trames de canaux en utilisant un décodage EFM pour produire des trames F3 ;
de positionnement de bits du sous-canal Q dans des octets de commande respectifs des trames F3 ;
de décodage des bits du sous-canal Q pour produire des informations de sous-canal Q décodées ; et
de décodage et de présentation des trames F3 en utilisant les informations de sous-canal Q décodées ;
**caractérisé en ce que** le décodage des bits de sous-canal Q comprend la modification de bits de données sélectionnés dans le sous-canal Q pour permettre la reproduction des données à partir du disque compact.

8. Procédé selon la revendication 7, dans lequel la modification des bits de données sélectionnés dans le sous-canal Q comprend :
la lecture d'une pluralité de bits de codage stockés ; et
l'exécution d'une opération OU exclusif entre les bits de données sélectionnés dans le sous-canal Q et ceux qui leur correspondent des bits de données.

9. Procédé selon la revendication 7, dans lequel la modification des bits de données sélectionnés dans le sous-canal Q comprend :
l'inversion sélective des bits de données du sous-canal Q.

10. Procédé selon l'une quelconque des revendications 7 à 9, comprenant en outre l'application de trames de données décodées à un décodeur CIRC (112), et l'inversion des trames de données sortant du décodeur CIRC (112).

11. Procédé selon l'une quelconque des revendications 7 à 9, dans lequel le décodage et la présentation des trames F3 comprennent :
l'élimination d'un octet de commande de chaque trame F3 pour produire une trame F2 ;
la réception de la trame F2 sur le décodeur CIRC (112) à code de Reed-Solomon entrelacé et cascade ; et
le décodage de la trame F2 au moyen du décodeur CIRC (112).

12. Procédé selon la revendication 11, dans lequel le décodage et la présentation des trames F3 comprennent en outre :
le désembrouillage de la sortie du décodeur CIRC (112) pour produire un train de données ; et
la présentation à un utilisateur du train de données sous une forme perceptible.

13. Procédé selon la revendication 12, dans lequel le décodage et la présentation des trames F3 comprennent en outre l'inversion de la sortie du décodeur CIRC (112) avant de désembrouiller la sortie du décodeur CIRC.

14. Système de lecture de disque compact, comprenant :
un système de lecture de données (104) conçu pour lire une pluralité de trames de canaux depuis un disque compact ;
un décodeur EFM (106) conçu pour décoder les trames de canaux afin de produire des trames F3 ;
un décodeur de sous-canal Q (110) conçu pour localiser des bits de sous-canal Q dans des octets de commande respectifs des trames F3 et pour produire des informations de sous-canal Q décodées ; et
un système de décodage et de présentation de signal (108, 112, 114, 116, 118) conçu pour recevoir et décoder les trames F3 afin de produire un train de données en utilisant les informations de sous-canal Q décodées, et pour présenter à un utilisateur le train de données sous une forme perceptible ;
**caractérisé en ce que** le décodeur de sous-canal Q (110) est conçu pour modifier des bits de données sélectionnés dans le sous-canal Q afin de permettre une présentation à un utilisateur du train de données sous une forme perceptible.

15. Système de lecture de disque compact selon la revendication 14, dans lequel le décodeur de sous-canal Q (110) est conçu pour lire une pluralité de bits de codage stockés ; et pour effectuer une opération OU exclusif entre les bits de données sélectionnés dans le sous-canal Q et ceux qui leur correspondent des bits de données.

16. Système de lecture de disque compact selon la revendication 14, dans lequel le décodeur de sous-canal Q (110) est conçu pour inverser sélectivement les bits de données du sous-canal Q.

17. Système de lecture de disque compact selon la revendication 14, dans lequel le système de décodage et de présentation de signal (108, 112, 114, 116, 118) comprend un décodeur CIRC (112) conçu pour recevoir des trames de données produites en utilisant les informations de sous-canal Q décodées, et un inverseur (114) conçu pour recevoir et inverser des trames de données sortant du décodeur CIRC (112).

18. Système de lecture de disque compact selon l'une quelconque des revendications 14 à 16, dans lequel le système de décodage et de présentation de signal (108, 112, 114, 116, 118) comprend :
un bloc de commande (108) conçu pour éliminer un octet de commande de chaque trame F3 afin de produire une trame F2 ; et
un décodeur CIRC (112) à code de Reed-Solomon entrelacé et cascadé conçu pour recevoir et décoder la trame F2.

19. Système de lecture de disque compact selon la revendication 18, dans lequel le système de décodage et de présentation de signal (108, 112, 114, 116, 118) comprend en outre :
un système de désembrouillage (118) conçu pour désembrouiller la sortie du décodeur CIRC (112) afin de générer un train de données ; et
un système de présentation conçu pour présenter le train de données sous une forme perceptible à un utilisateur.

20. Système de lecture de disque compact selon la revendication 19, dans lequel le système de décodage et de présentation de signal (108, 112, 114, 116, 118) comprend en outre un inverseur (114) conçu pour inverser la sortie du décodeur CIRC (112) avant le désembrouillage de la sortie du décodeur CIRC (112) par le système de désembrouillage (118).
